# EUROPEAN PATENT APPLICATION

(11) **EP 3 564 455 A1**
(43) Date of publication of application: **06.11.2019**
(21) Application number: 18170811.6
(22) Date of filing: 04.05.2018
(51) Int. Cl.: E04B 1/80

(54) **INSULATING SYSTEM AND METHOD FOR MANUFACTURING AN INSULATING SYSTEM**

(71) Applicant: ETH Zurich, 8092 Zurich (CH)
(72) Inventor: FLATT, Robert, 8706 MEILEN (CH); SANZ PONT, Daniel, 8804 Au (CH); GRASER, Konrad, 8634 Hombrechtikon (CH); BAUR, Marco, 8004 Zürich (CH)

(57) **Abstract**

The invention relates to an insulating system (1), in particular for placement between a temperature-controlled area and a non-temperature-controlled area. The insulating system (1) comprises a carrier structure (2) comprising a first panel element (3) and a second panel element (4), which are opposite one another and arranged at a distance from another, at least one of the panel elements (3, 4) and preferably both panel elements being formed by a flexible membrane structure. The insulating system (1) further comprises at least one internal chamber (5) provided - at least partly - between the first and second panel elements (4), wherein the at least one internal chamber (5) is filled with thermal insulating particles, in particular aerogel particles, and most preferably translucent silica aerogel particles. The air pressure of the internal chamber (5) of the insulating system (1) can be actively controlled, to either inflate or outgas the chamber, in order to regulate the overall thermal insulation on demand. The dimension of the chamber can be further regulated by tensioning cables placed on the outer side of at least one of the flexible membranes, or by the application of external/internal forces on the membranes by other means.

## Description

The present invention relates generally to insulating devices. More specifically, the present invention relates to insulating systems, which provide a heat transfer barrier within a structure.

According to embodiments disclosed herein, the invention also relates to aerogel translucent active vacuum free-form panels for lightweight facade insulation, possibly produced via digital fabrication. Moreover, a multifunctional free-form thermal insulating translucent vacuum facade system is disclosed. The system is made with transparent membranes and filled with particles or granules of insulating material with a λ <45 mW/m·K and a particle density <450 kg/m³, preferably aerogel particles or granules with a λ <20 mW/m·K and a particle density <250 kg/m³, and more preferably translucent silica aerogel particles or granules with a λ < 15 mW/m·K and a particle density < 180 kg/m³, through novel compacting method and an "active system "to keep/control vacuum adapting thermal insulation on demand via digital fabrication.

Building structures constructed for human occupancy typically maintain the temperature and humidity conditions inside the building at a comfortable level for its occupants with the use of heating and air conditioning equipment controlled by a thermostat, whereas the temperature outside the building varies with atmospheric conditions. In a twenty-four-hour day, during most days of a year in most inhabited locations of the world, the temperature of a roof or an external wall that faces the sun typically ranges to levels below and above the desired indoor temperature.

The roof and exterior wall structure of a typical modern building includes at least one layer of thermal insulation material that retards the transfer of heat between the inside and outside surfaces. If the insulation material present in the typical insulated wall or ceiling is sufficient, then the transfer of heat during the high temperature portion of the day from the hot outside portion of the wall or ceiling to the lower inside temperate portion of the wall or ceiling will be sufficiently slow so that the air conditioning unit of the building can adequately compensate for any undesirable increases in temperature. Later, during the same day, the exterior portion of the wall and ceiling will cool during the low temperature portions of the day, usually to a temperature that is lower than the inside temperature of the building. In a like manner, the heating unit of a sufficiently insulated building should be able to adequately compensate for any undesirable decrease in temperature.

The rate at which heat will flow through a wall or ceiling into or out of a room maintained at a substantially constant temperature is dependent upon at least two factors: (1) the temperature gradient between the controlled temperature air space (i.e., the living space or the inside of the building structure) and the uncontrolled temperature air space (i.e., the attic space or the outside of the building structure), and (2) the efficiency with which the ceiling or wall conducts heat. Thus, in order to reduce heat transfer across a wall or ceiling, either more efficient insulating material may be used, or a greater amount of insulating material may be used. Unfortunately, the type of material and the amount of material used for insulation is typically fixed (i.e., not readily changeable). Hence, once the insulation of a structure has been installed, the heat transfer characteristics of the insulation are fixed. This, in turn, leads to a less than optimal insulating efficiency because the heat transfer characteristics of the insulation remains fixed regardless of the fluctuating external temperature.

Moreover, the building sector is responsible for around 36% of CO₂ emissions and 40% of the energy use in Europe. The Swiss Federal Council has developed the Energy Strategy 2050, in which one of the main pillars is the promotion of energy efficiency via the Building Program. The main aim is to considerably reduce the energy consumption and CO₂ emissions in the Swiss building industry by promoting Minergie standards in order to reach zero-energy buildings. Such scenario requires the optimal use of energy resources and a further increase of the thermal insulating layer thickness (up to 35 cm), and consequently reduce living area importantly. The only way to avoid this problem is by using high performance thermal insulation (superinsulation), however, the market offer of such products is highly limited. Furthermore, translucent facade systems can reduce the use of energy by getting benefit of sunlight for interior lighting, however, the poor thermal insulation of the existing solutions in the market limits the area of the facade that can be applied, being not possible to replace an opaque wall to fulfill the thermal insulation requirements.

There is, therefore, a need in the art for a more efficient method of an insulating structure.

Briefly described, the present invention relates to insulating systems, in particular for placement between a temperature-controlled area and a non-temperature-controlled area, wherein the insulating system comprises a carrier structure having a first panel element and a second panel element, which are opposite one another and arranged at a distance from another, wherein at least one of the panel elements and preferably both panel elements are formed by a flexible membrane structure. The insulating system further comprises at least one internal chamber provided - at least partly - between the first and second panel elements of the carrier structure. The at least one internal chamber is filled with aerogel particles, in particular, translucent aerogel particles. Both panels can be interconnected, forming two or more parallel cavities, perpendicular to the carrier structure, within the same element. Additionally, the system can be integrated with other layers to form additional chambers with positive pressure (air inflated).

Aerogels are the world's highest thermal insulating material. With a thermal conductivity of 13 mW/m·K and bulk density between 50 to 200 kg/m³, silica aerogels can provide two times more insulation than standing air (26 mW/m·K). Its outstanding thermal insulating properties are due their porosities higher than 90%, with a mean pore size of 20 nm, which generates the so called Knudsen effect. This occurs when the pore size is smaller than the mean free path of air, preventing air molecules from colliding with each other, thus virtually eliminating convection.

Furthermore, the full potential of silica aerogels occurs under vacuum, achieving a thermal conductivity of 4 mW/m·K below 20 mbar.

While supercritical dried aerogel monoliths are limited to aerospace applications due to their prohibitive price, ambient dried aerogel granules have been used during the last decade for building applications, especially as window composites with glass panes for thermal insulation and daylighting systems, due to the material's translucency.

Depending on the level of compaction of the aerogel granules, it is possible to reach a thermal conductivity between 13 to 19 mW/m·K, at ambient pressure, which means, we can build thermal insulating translucent elements with a U-value <0.20 W/m²·K, and a thickness between 7 to 10 cm. For comparison, typical glazing units only achieve U-values higher than 0.50, while conventional thermal insulation materials require thicknesses of at least 20-25 cm to achieve comparable U values, without any light transmittance. In our invention, it is possible to engineer custom sized and ultra-high performance (U-, g-value and light transmittance) differentiated, frame-free translucent insulation panels or unitized façade systems, using layers of transparent or translucent flexible sheet, foil, or fabric materials as aerogel carrier structure.

According to embodiments of the present disclosure, the present invention relates to an ultra-high performance version of a façade system by the application of vacuum in the at least one internal chamber through multilayer membranes including EVAL, EVOH. These embodiments are intended to have an active air pressure system in the at least one internal chamber while the insulating system of said is in service in order to influence actively control the U-value to having an adaptive insulating system that can react to changing environmental influences.

According to embodiments of the inventive insulating system, the first panel element and the second panel element are arranged such as to define a closed-off volume there between, said closed-off volume serving as the at least one internal chamber filled with the aerogel particles.

The carrier structure of the insulating system can comprise a frame structure to which the flexible membrane structure of the first and/or second panel element is attached and preferably stretched. Other membranes can be integrated to form more than one cavity, in which extra cavities can be inflated with air or other gas, using an active pump system.

According to some embodiments disclosed herein, a bulk particle density in the at least one internal chamber is at least 80 kg/m³, preferably between 90 to 100 kg/m³, and more preferably between 100 to 155 kg/m³.

The insulating system can comprise a density control mechanism for regulating the bulk particle density of the particles or granules filled in the at least one internal chamber. According to some embodiments, the density control mechanism is configured to keep or control vacuum in the at least one internal chamber.

The density control mechanism may comprise tensioning means for tensioning the flexible membrane structure of the first and/or second panel element. In addition, or as an alternative, the density control mechanism may comprise an air-vacuum pump for keeping or controlling a vacuum in the at least one internal chamber.

The insulating system may further comprise at least one dense elastic band serving as acoustic insulating means, either within the boundary or as a high density transparent membrane layer.

In accordance with preferred embodiments of the inventive insulating system, the first panel element and the second panel element of the carrier structure are constituted - at least partly - by a flexible membrane structure, respectively. The carrier structure further comprises a frame structure to which the flexible membrane structures of the first and second panel elements are attached and preferably stretched. Moreover, between the membrane structures of the first and second panel elements, an internal distance is between 5 cm and 35 cm, and preferably between 10 cm and 25 cm.

According to some embodiments disclosed herein, the flexible membrane structure utilized in the carrier structure of the insulating system has a thickness of between 1,000 µm and 100 µm, preferably between 850 µm and 150 µm, and more preferably between 750 µm and 250 µm.

The invention also relates to a method for manufacturing an insulating system, in particular an insulating system according to the above-discussed art, wherein the method comprises the step of providing at least one internal chamber between a first panel element and a second panel element of a carrier structure, and the step of filling the at least one internal chamber with aerogel particles, in particular translucent silica aerogel particles. According to the inventive method, the filling-step comprises the sub-step of overfilling of the at least one internal chamber with said particles or granules of insulating material with a λ <45 mW/m·K and a particle density <450 kg/m³, preferably aerogel particles or granules with a λ <20 mW/m·K and a particle density <250 kg/m³, and more preferably translucent silica aerogel particles or granules with a λ < 15 mW/m·K and a particle density < 180 kg/m³, such that the flexible membrane structure of the first and/or second panel element is stretched and deflected, and the additional sub-step of compressing the stretched membrane structure of the corresponding panel element to bring back the corresponding panel element to bring back the corresponding panel element to its initial dimensions, i.e. the dimensions before filling the at least one internal chamber with aerogel particles.

According to some embodiments of the inventive method, the stretched membrane structure of the corresponding panel element is compressed by internal pressure regulation, application of external forces to the stretched membrane structure, or a combination thereof.

The method may further comprise the additional step of vibrating the at least one internal chamber at least temporarily during the filling-step. In addition, the method may comprise the additional step of outgassing performed at least temporarily during the filling-step.

Preferably, the compressing-step is repeated or performed until a bulk particle density within the at least one internal chamber is at least 80 kg/m³, preferably between 90 kg/m³ to 100 kg/m³, and more preferably between 100 to 155 kg/m³.

According to preferred embodiments of the inventive method, the at least one internal chamber is overfilled such that the highest membrane structure deflection point is between 30 % to 60 %, preferably between 40 % to 55 %, and more preferably at 50 % of the total height of the membrane structure.

The above and further features, advantages and benefits of the present invention will be apparent upon consideration of the following detailed description, taken in conjunction with the accompanying drawings in which like reference characters refer to like parts throughout.
- FIG. 1: is a perspective view of one exemplary embodiment of the inventive insulating system; and

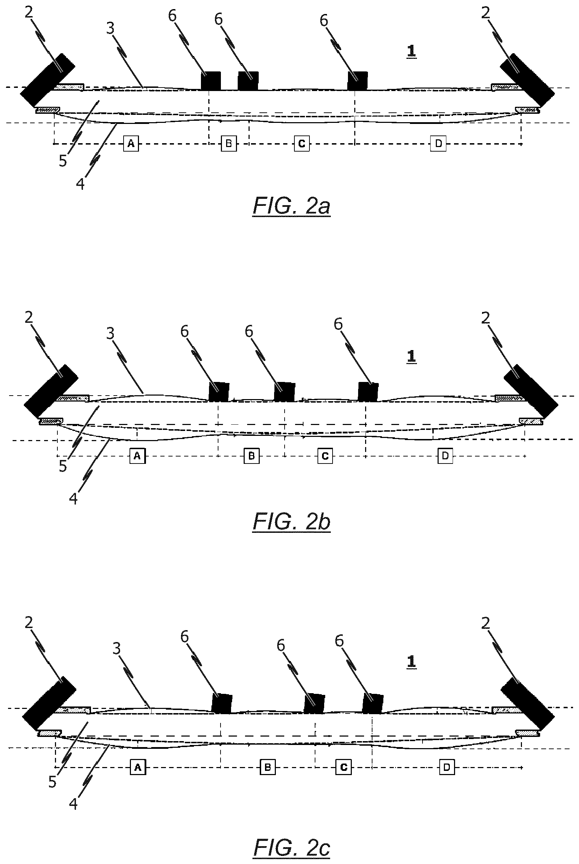

- FIGS. 2a to 2c: are detailed cross-sections of the insulating system illustrated in FIG. 1.

Having summarized various aspects of the present invention, reference will now be made in detail to the description of the invention as illustrated in the drawings. While the invention will be described in connection with these drawings, there is no intention to limit it to the embodiment or embodiments disclosed therein. On the contrary, the intent is to cover all alternatives, modifications, and equivalence included within the spirit and scope of the invention as defined by the appendant claims.

The invention consists in a lightweight panel/façade system (insulating system 1) for buildings, made with flexible ultra-high performance transparent membranes and internal chambers, filled with highly translucent silica aerogel particles. The elements include cables and/or an "active system" to keep or control vacuum in the chambers, as well as providing the proper stabilization and compaction of the aerogel granules. The innovation of the elements as a product, is linked to the innovative fabrication processes and engineering of the elements, in which digital fabrication is preferred.

The main features of the invention as a product are referred to its multifunctionality, and can include the following: ultra-high thermal insulation (with adjustable U-value), fulfilling Swiss regulation requirements with 4 to 10 cm total thickness (such as VIP panels, but without losing vacuum and without size limits), high translucency, to benefit from sunlight for interior lighting, high acoustic insulation, energy generation (through transparent photovoltaic cells), fire protection and safety, generating an ultra-high performance facade system.

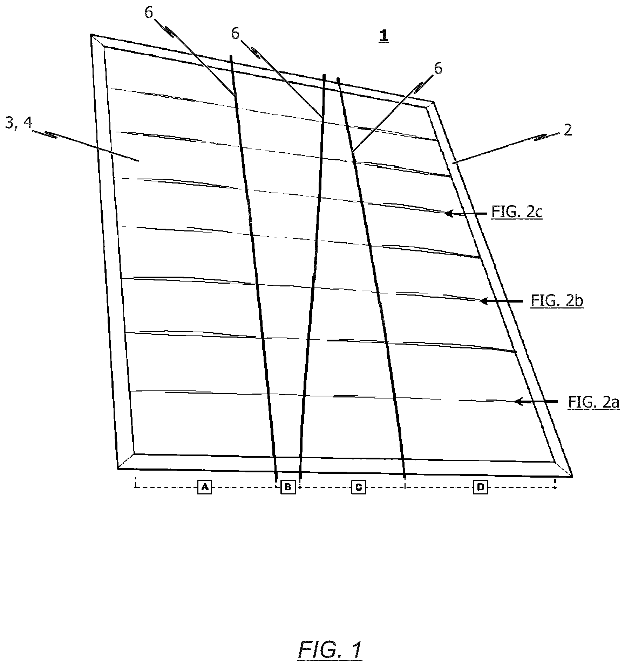

The exemplary embodiment of the inventive insulating system 1 illustrated in FIG. 1 consist in two or more aluminum frames of a carrier structure 2, to which a first and second panel element 4, 5 each in the form of a membrane are attached and stretched. The frames are bonded to each other, forming a window-like unit, using dense elastic bands 6 as part of the acoustic insulation engineering (mass-spring-mass principle), generating a cavity in between. One of the membranes has at least one opening to introduce the particles or granules of insulating material with a λ <45 mW/m·K and a particle density <450 kg/m³, preferably aerogel particles or granules with a λ <20 mW/m·K and a particle density <250 kg/m³, and more preferably translucent silica aerogel particles or granules with a λ < 15 mW/m·K and a particle density < 180 kg/m³, into the cavity, and at least another one, an air control valve, with filters to avoid the escape of aerogel dust into the environment. A cable system 6 can also be attached to the membranes for post-tensioning purposes.

The main novelty of the filling process is that the aerogels are blown into the cavity, using an air pressure pumping system, which inflates the cavity (internal chamber 5) while introducing the particles (forming a temporary pillow-like panel), thus, expanding the volume and introducing a substantially increased amount of granules, in relation to the initial volume of the cavity. An air control valve regulates the amount of air during the filling process: initially, it allows increasing the volume, but as the filling process is progressing, it allows controlling the evacuation of the air while being substituted by the aerogel particles.

Once the filling process is finished, the tension forces generated in the membranes by the volume expansion, initiates the compaction and stabilization process, and are assisted by the posttensioning of a cable system and/or with air/vacuum pumps connected the valves, that are further used as an "active system" to keep or control the vacuum during the service life of the panel. At the end of the two steps, a quasi-constant thickness for all panels is obtained, as well as a high level of compaction and stabilization of the aerogel particles. The mentioned processes allow to increase the stiffness and produce complex shapes (oriented to enhance material properties and the integration with environment).

When the "active vacuum system" is applied, it is possible to actively regulate the level thermal insulation (U-value) on demand, by applying different levels of vacuum, adapting the façade to real time weather conditions. Additionally, the facade system also provides high light transmission and high acoustic insulation by combining different layers/types of membranes to provide multifunctionality. A low cost version of the panel without the active vacuum regulation system is also possible, giving the possibility of different product categories depending on the client needs/capabilities. In these cases, vacuum may or not be applied initially.

The membranes (foils/films) of the inventive insulating system may include ETFE (or similar transparent or translucent membranes) for the enclosure, transparent high density Vinyl (or similar) for enhancing acoustic insulation and puncture protection, and EVOH for reducing the oxygen transmission rate generated by the pressure difference between chambers and the environment, including the possibility of generating a gradient pressure within the layers/chambers for an improved internal pressure/vacuum control. Other transparent membranes with integrated photovoltaic cells can be implemented towards energy generation to enhance the energy efficiency of the building, as well as membranes to control the g-value depending on the solar angle.

Another important feature of the invention is referred to computational design (using or not algorithms and building physics simulation), as well as manufacturing/installation steps via digital fabrication, in which the shape of the panels can be pre-shaped and stiffened by the mentioned vacuum system and/or with cables, to obtain either flat or free-form façade elements such as double curved surfaces.

In this approach, the freedom for the shape's design is oriented to generate a synergy between shape and material properties (thermal and acoustic insulation, and so forth), for the development of "bioclimatic facades" customized for each project, location and orientation. The integration with the environment is enhanced through computational design, either potentiating or preventing solar radiation/shadows, natural lighting, wind flow or wind loads, and so forth.

The alternative to properly stabilize the particles is to vibrate and refill the panel several times, however, rigid systems, such as glass panes cannot guarantee further packing in order to properly remove voids between the aerogel particles, as this process is limited to the light weight of the aerogel particles, thus, compromising the final performance. In this sense, an essential feature of our invention is the flexibility of the boundaries of the cavity, in which the membranes are complemented with a controlled vacuum system and/or cables for post-tensioning. These features are necessary to achieve a substantially higher compaction of the aerogel granules and proper stability in one step, as well as customized shapes and desired rigidity, providing an increase in thermal insulation performance.

Additionally, there is no alternative to control thermal insulation on demand and achieve the proposed ultra-high insulation levels, without an active vacuum system, however, an alternative and less performing solution could be to apply a low conductive gas, being still essential, an "active system" using vacuum/air pumps. A lower cost/more limited solution of the invention is not using an "active system" thus, fixing the thermal insulation performance, however, limiting the life time of the system if vacuum is used.

The main technical improvements of the inventive system is that, through flexible membranes, a controlled active vacuum system and cables, is possible to achieve an enhanced packing density and high stability of aerogel granules in two single steps, added to the capability of freedom for the panels' shape and highly reduced frame area, complemented by digital fabrication.

The main key aspect of the development of panels or facade systems using loose particles to fill the cavity, is a proper filling and processing of the granulates to provide an enhanced packing, and thus proper particle stabilization and improved thermal insulation. This is due to the fact that the settling of particles within a confined volume is a dynamic process with high complexity, due to the characteristic shape and low particle density of the aerogel granules.

In general, an aerogel bulk density of at least 100 kg/m³ within the cavity is desired. Nevertheless, it would be more preferably to reach a bulk density of 155 kg/m³. Schematically this involves two steps, the first of which is an "overfilling" of the cavity that leads to a stretching of the membrane. It is followed by a compression of the membrane to bring back the panel to its initial dimensions by using a combination of internal pressure regulation and application of external forces through tension cables. This step also takes advantage of the low young modulus of the ETFE and makes it possible to produce a membrane panel with a compaction degree of particles that cannot be reached with rigid panels.

The first and most important information is that, as intended, the membrane compaction works and raises the aerogel level to a higher level when the initial thickness is restored. The second important information is that the use of cycles in the compaction process is also effective.

More specifically, the exemplary embodiment of the inventive insulating system is based on two stretched membranes, attached to a frame, consisting in two sub frames bonded together. An air tight cavity, with the required thickness to reach a targeted U-value (e.g. 10 cm for a U-value of <0.2 at ambient pressure, or 2 to 4 cm if vacuum within the cavity is applied) is left between the membranes and is filled with particles or granules of insulating material with a λ <45 mW/m·K and a particle density <450 kg/m³, preferably aerogel particles or granules with a λ <20 mW/m·K and a particle density <250 kg/m³, and more preferably translucent silica aerogel particles or granules with a λ < 15 mW/m·K and a particle density < 180 kg/m³, at a later stage. The system can be symmetric or asymmetric in terms of membrane thicknesses: e.g. 250 µm for the outer membrane and e.g. 500 µm for the inner one. The external membrane can have steel cables and the internal membrane can be supported by a secondary structure, depending on the building type to be integrated. (e.g. for a wooden type construction, three wooden elements aligned with the mentioned cables. During the filling process, some temporary deflection of the membranes is needed, in order to be able to blow in a higher amount of material (high pressure) compared to the initial volume ("overfilling").

Once the filling process is finished and atmospheric pressure is restored, the membranes should be able to constrain the internal pressure generated by the aerogel packing efficiently, in order to guarantee a quasi-constant thickness, and keep the aerogel bulk density as targeted. However, this does not occur naturally owing to the "jamming" of the "over packed" aerogel. The application of vacuum and the compression of the membranes allow to overcome the inter-granular friction of the aerogel and restore the desired thickness.

The promotion of a higher packing density as well as the reduction of the membrane deflection can be performed by a combination of outgassing via vacuum pump, manual membrane vibration and controlled tensioning of the cable system, performed in cycles. This strategy aims to assist membrane's lateral forces in order to reach as much as possible, a constant thickness with an acceptable membrane deflection.

Although exemplary embodiments of the present invention have been shown and described, it will be apparent to those of ordinary skill in the art that a number of changes, modifications, or alterations to the invention as described may be made, none of which depart from the spirit of the present invention. For example, although the non-limiting drawings illustrate insulating the ceiling of a structure, the same may be applied to walls, rafters, roofing systems, etc.

All such changes, modifications, and alterations should be seen as within the scope of the present invention.

## Claims

1. An insulating system (1), in particular for placement between a temperature-controlled area and a non-temperature-controlled area, the insulating system (1) comprising:
- a carrier structure (2) comprising a first panel element (3) and a second panel element (4), which are opposite one another and arranged at a distance from another, at least one of the panel elements (3, 4) and preferably both panel elements being formed by a flexible membrane structure having at least one membrane particularly made of ETFE, PTFE, EVOH, PVC or a similar preferably transparent or translucent material; and
- at least one internal chamber (5) provided - at least partly - between the first and second panel elements (4),
wherein the at least one internal chamber (5) is filled with particles of insulating material with a λ <45 mW/m·K and a particle density <450 kg/m³, preferably aerogel particles or granules with a λ <20 mW/m·K and a particle density <250 kg/m³, and more preferably translucent silica aerogel particles or granules with a λ < 15 mW/m·K and a particle density < 180 kg/m³.

2. The insulating system (1) according to claim 1,
wherein the first panel element (3) and the second panel element (4) are arranged such as to define a closed-off volume there between, said closed-off volume serving as the at least one internal chamber (5).

3. The insulating system (1) according to claim 1 or 2,
wherein the carrier structure (2) further comprises a frame structure to which the flexible membrane structure of the first and/or second panel element (4) is attached and preferably stretched.

4. The insulating system (1) according to one of claims 1 to 3,
wherein the particles of insulating material comprises aerogel particles, and wherein a bulk particle density is at least 80 kg/m³, preferably between 90 kg/m³ to 100 kg/m³, and more preferably between 100 to 155 kg/m³.

5. The insulating system (1) according to one of claims 1 to 4,
further comprising a density control mechanism for regulating the particle density of the particles filled in the at least one internal chamber (5).

6. The insulating system (1) according to claim 5,
wherein the density control mechanism comprises tensioning means (6) for tensioning the flexible membrane structure of the first and/or second panel element (3, 4); and/or
wherein the density control mechanism comprises an air-vacuum pump for keeping or controlling a vacuum in the at least one internal chamber (5).

7. The insulating system (1) according to one of claims 1 to 6,
further comprising at least one dense elastic band and/or acoustic membrane (6) preferably made of transparent high density Vinyl serving as acoustic insulating means, said at least one dense elastic band preferably covering the perimeter of a frame structure of the carrier structure (2), and said acoustic membrane (6) being preferably placed as an additional layer, thus forming and extra cavity.

8. The insulating system (1) according to one of claims 1 to 7,
wherein the first panel element (3) and the second panel element (4) of the carrier structure (2) are constituted - at least partly - by a flexible membrane structure, respectively;
wherein the carrier structure (2) comprises a frame structure to which the flexible membrane structure of the first and second panel elements (3, 4) are attached and preferably stretched; and
wherein an internal distance between the membrane structures of the first and second panel elements (3, 4) is between 2 cm and 35 cm, preferably between from 2 cm and 10 cm, if vacuum within the cavity formed by the flexible membrane structure of the first and second panel elements (3, 4) is applied and preferably between 8 cm and 25 cm if the cavity is at ambient pressure.

9. The insulating system (1) according to one of claims 1 to 8,
wherein the flexible membrane structure has a thickness of between 1,000 µm and 100 µm, preferably between 850 µm and 150 µm, and more preferably between 750 µm and 250 µm.

10. The insulating system (1) according to one of claims 1 to 9,
wherein the flexible membrane structure has flexible photovoltaic cells, either transparent, translucent or opaque for energy generation.

11. The insulating system (1) according to one of claims 1 to 10,
wherein at least the at least one internal chamber (5) is provided with an active vacuum system to control the air pressure on demand and to provide a switchable U-value capability of the insulating system (1).

12. The insulating system (1) according to one of claims 1 to 11,
wherein a plurality of internal chambers (5) is provided, wherein at least one of the plurality of internal chambers (5) is filled with particles of insulating material, in particular translucent silica aerogel particles, wherein the pressure in the respective one of the plurality of internal chambers (5) is controllable such as to provide a pressure gradient arrangement for reducing an overall oxygen transmission rate, thus providing enhanced thermal insulation performance, and wherein the at least one membrane of the flexible membrane structure is preferably made of a material with low oxygen transmission rate, in particular EVOH.

13. Method for manufacturing an insulating system (1), in particular an insulating system (1) according to one of claims 1 to 12, wherein the method comprises the following method-steps:
i) providing at least one internal chamber (5) between a first panel element (3) and a second panel element (4) of a carrier structure (2), at least one of the panel elements (3, 4) and preferably both panel elements being formed by a flexible membrane structure;
ii) filling the at least one internal chamber (5) with particles of insulating material with a λ <45 mW/m·K and a particle density <450 kg/m³, preferably aerogel particles or granules with a λ <20 mW/m·K and a particle density <250 kg/m³, and more preferably translucent silica aerogel particles or granules with a λ < 15 mW/m·K and a particle density < 180 kg/m³,
wherein the filling-step comprises:
ii-1) overfilling the at least one internal chamber (5) with said particles such that the flexible membrane structure of the first and/or second panel element (4) is stretched and deflected;
ii-2) compressing the stretched and deflected membrane structure of the corresponding panel element such as to bring back the corresponding panel element to its initial dimensions, or as close as possible.

14. Method according to claim 13,
wherein the stretched membrane structure of the corresponding panel element (3, 4) is compressed by internal pressure regulation, application of external forces to the stretched membrane structure, or a combination thereof.

15. Method according to claim 13 or 14,
wherein the at least internal chamber (5) is vibrated, at least temporarily during the filling-step, wherein the vibration is preferably manually, mechanically, by sound/ultrasound or impact induced performed; and/or wherein the step of outgassing is performed at least temporarily during the filling-step; and/or
wherein the compressing-step is repeated or performed until a bulk particle density in the at least one internal chamber (5) is at least 80 kg/m³, preferably between 90 kg/m³ to 100 kg/m³, and more preferably between 100 to 155 kg/m³; and/or
wherein the at least one internal chamber (5) is overfilled such that the highest membrane structure deflection point is between 30 % to 60 %, preferably between 40 % to 55%, and more preferably at 50% of the total height of the membrane structure.
